# DEMANDE DE BREVET EUROPEEN

(11) **EP 0 694 458 A1**
(43) Date de publication de la demande: **31.01.1996**
(21) Numéro de dépôt: 95111405.7
(22) Date de dépôt: 20.07.1995
(51) Int. Cl.: B60S 1/40

(54) **Balai d'essuie-glace de véhicule automobile comportant un capot d'obturation**

(30) Priorité: 26.07.1994 FR 9409339
(71) Demandeur: VALEO SYSTEMES D'ESSUYAGE, F-78321 La Verriere (FR)
(72) Inventeur: Jarasson, Jean-Michel, F-93130 Noisy le Sec (FR)
(74) Mandataire: Gamonal, Didier

(57) **Abrégé**

L'invention propose un balai d'essuie-glace (10) de véhicule automobile, du type comportant deux ailes latérales (12) reliées entre elles par un dos transversal supérieur (14) qui comporte une ouverture longitudinale (16), destinée par exemple à permettre l'introduction de moyens d'accrochage d'un bras d'essuie-glace (22) sur le balai d'essuie-glace (10), et du type comportant un capot (36) d'obturation partielle de l'ouverture (16), caractérisé en ce que le capot (36) est une pièce amovible fixée sur le balai d'essuie-glace (10, 12).

## Description

L'invention concerne un balai d'essuie-glace de véhicule automobile.

L'invention concerne plus particulièrement un balai d'essuie-glace du type comportant deux ailes latérales reliées entre elles par un dos transversal supérieur qui comporte une ouverture longitudinale qui est par exemple destinée à permettre l'introduction de moyens d'accrochage du bras d'essuie-glace sur le balai d'essuie-glace.

Cette conception particulièrement répandue du balai d'essuie-glace permet de réaliser ce dernier par découpe et pliage d'un flan de tôle.

L'ouverture est nécessaire pour les opérations d'accrochage du bras d'essuie-glace dont l'extrémité libre est par exemple réalisée en forme de crochet et est introduite par l'ouverture pour son accrochage sur une pièce d'articulation qui est par exemple fixée sur un axe transversal d'articulation qui s'étend entre les ailes latérales parallèles du balai d'essuie-glace.

Il a déjà été proposé dans le document
FR-A-2.659.613 un capot d'obturation partielle de l'ouverture qui est réalisé venu de matière avec une pièce ou partie de montage appartenant aux moyens d'accrochage du bras d'essuie-glace et qui est rapportée et fixée dans l'ouverture.

Cette conception du capot d'articulation réalisée venue de matière en une seule pièce par moulage est particulièrement complexe et elle ne permet pas de conférer au capot des formes complexes visant notamment à améliorer l'esthétique de l'ensemble de l'essuie-glace.

De plus la fragilité de la charnière est telle qu'elle limite le nombre possible d'opérations d'ouverture, puis de fermeture à nouveau, du capot, notamment en vue du remplacement du balai d'essuie-glace.

La présente invention a pour but de proposer une nouvelle conception d'un balai d'essuie-glace qui permet de remédier à ces inconvénients.

Dans ce but, l'invention propose un balai d'essuie-glace du type comportant un capot d'obturation partielle de l'ouverture, caractérisé en ce que le capot est une pièce amovible fixée sur le balai d'essuie-glace.

Selon d'autres caractéristiques de l'invention :
- le capot comporte au moins un pion de fixation reçu dans un trou correspondant formé dans le dos transversal du balai d'essuie-glace au voisinage de l'un des bords transversaux d'extrémité de l'ouverture ;
- le pion s'étend depuis la face inférieure du capot ;
- le capot est susceptible de pivoter par rapport au balai d'essuie-glace autour de l'axe du pion, en vue de dégager l'ouverture ;
- le capot est souple de manière à pouvoir être soulevé par déformation élastique, en vue de dégager l'ouverture ;
- le capot est fixé au dos du balai d'essuie-glace par ses deux extrémités longitudinales opposées ;
- le profil de la face supérieure du capot épouse sensiblement le profil des bords longitudinaux supérieurs de l'ouverture.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée d'un premier exemple de réalisation d'un balai d'essuie-glace et de son capot ;
- la figure 2 est une vue en section longitudinale par un plan médian du balai d'essuie-glace et du capot illustré sur la figure 1 en association avec un bras d'essuie-glace et ses moyens d'accrochage ;
- la figure 3 est une vue latérale en élévation qui illustre une variante de réalisation du capot de la figure 1 ;
- la figure 4 est une vue similaire à celle de la figure 1 qui illustre un autre mode de réalisation du capot et de ses moyens de fixation ; et
- la figure 5 est une vue similaire à celle de la figure 4 qui illustre une variante de réalisation de la forme du capot.

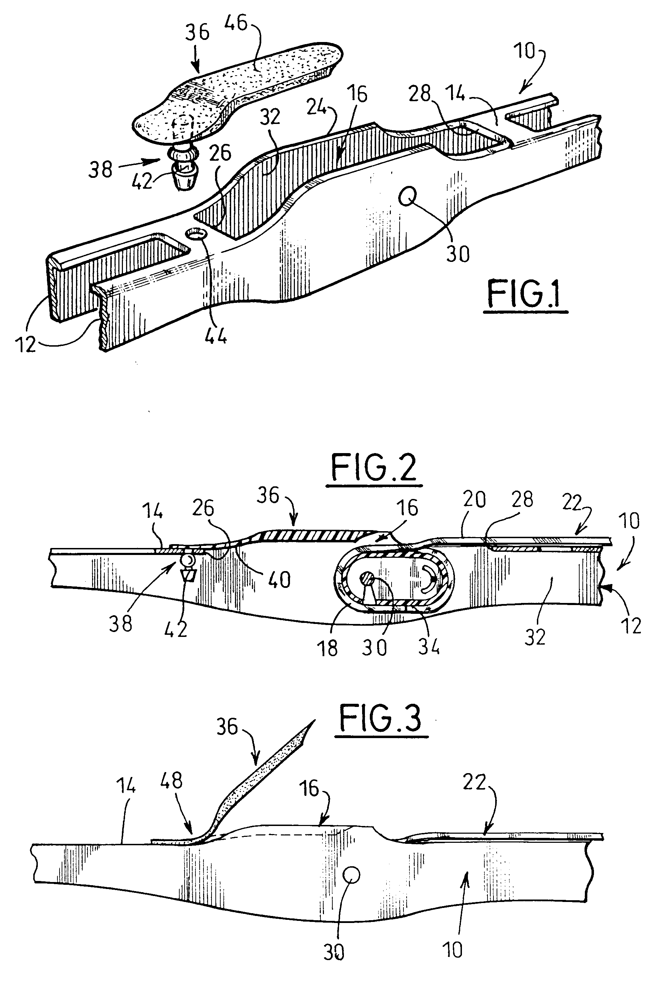

On a représenté sur la figure 1 un balai d'essuie-glace 10 qui est pour l'essentiel constitué par deux ailes latérales parallèles 12 qui sont reliées entre elles par un dos transversal supérieur 14 de manière à conférer au balai d'essuie-glace 10 une section transversale en forme générale de U renversé.

Le dos supérieur 14 comporte notamment une ouverture 16 destinée à recevoir des moyens d'accrochage de l'extrémité en forme de crochet 18 de la tige 20 d'un bras d'essuie-glace 22 qui est illustré sur la figure 2.

A cet effet l'ouverture 16 est délimitée latéralement par des bords supérieurs longitudinaux 24 et par deux bords transversaux d'extrémité opposés 26 et 28.

Un axe d'articulation 30 s'étend transversalement entre les faces internes opposées 32 des ailes 12 du balai d'essuie-glace 10 selon une direction perpendiculaire à la direction longitudinale générale du balai d'essuie-glace 10 et du bras d'essuie-glace 22.

Le dispositif pour l'accrochage et l'articulation du bras d'essuie-glace sur l'axe 30 comporte par exemple une pièce d'articulation 34 qui est emboîtée élastiquement sur l'axe d'articulation 30, selon une technique connue.

L'ouverture 16 est dimensionnée de manière à permettre l'introduction, de bas en haut, de l'extrémité en forme de crochet 18 à l'intérieur du balai d'essuie-glace entre les ailes latérales 12 puis à permettre le coulissement du crochet, de la gauche vers la droite en considérant la figure 2, pour qu'il vienne s'emboîter sur la pièce d'articulation de forme complémentaire 34.

Afin d'améliorer l'esthétique de l'essuie-glace, après l'accrochage du bras d'essuie-glace 22 sur le balai d'essuie-glace 10, il est prévu un capot amovible 36 d'obturation partielle de l'ouverture 16.

A cet effet, et conformément aux enseignements de l'invention, le capot 36 est une pièce moulée en matière plastique qui comporte des moyens 38 pour sa fixation directement sur le dos 14 du balai d'essuie-glace 10.

A cet effet, la face inférieure 40 du capot 36 comporte un pion 42 qui est emboîté élastiquement dans un trou complémentaire 44 formé dans le dos 14.

Le montage du capot 36 s'effectue par emboîtement élastique du pion 42 dans le pion 44 et le capot occupe alors sa position d'obturation illustrée sur la figure 2.

Comme on peut le constater aux figures 1 et 2, le profil du capot 36, et notamment de sa face supérieure 46, est complémentaire du profil des bords supérieurs longitudinaux 24 afin d'améliorer l'esthétique de l'essuie-glace.

Dans la variante de réalisation illustrée sur la figure 3, le capot 36, qui est fixé sur le dos 14 comme dans le cas du mode de réalisation illustré aux figures 1 et 2, comporte une partie souple 48 qui permet de déformer élastiquement le capot 36 pour faire pivoter ce dernier autour d'un axe sensiblement parallèle à l'axe d'articulation 30 pour dégager l'ouverture 16, par exemple en vue de procéder au remplacement du balai d'essuie-glace.

Dans le mode de réalisation illustré aux figures 1 et 2, il est également possible d'accéder à l'ouverture 16 en dégageant cette dernière faisant pivoter latéralement le capot 36 par rotation de son pion ou doigt de fixation 42 dans le trou 44.

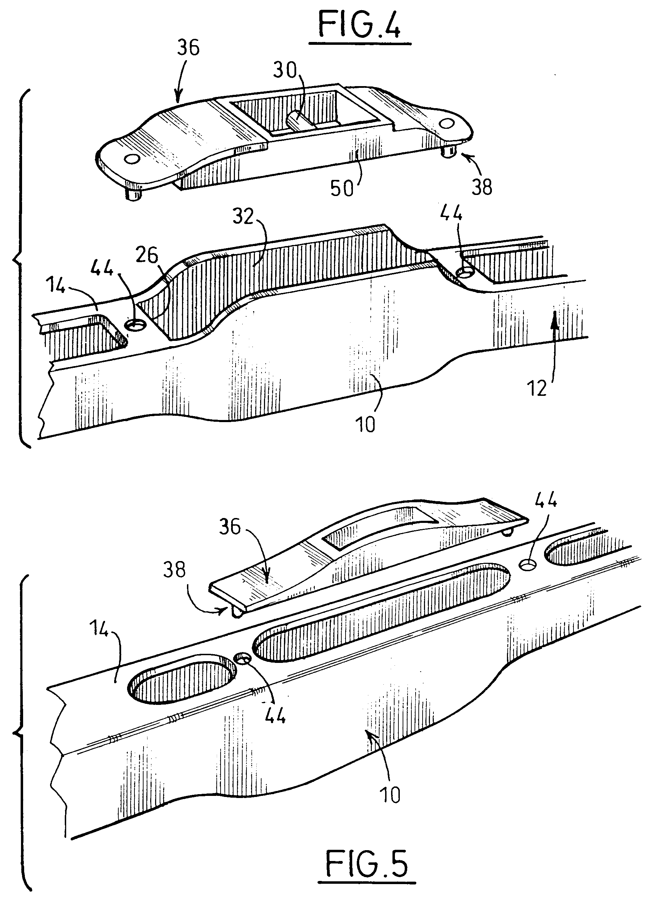

Dans la variante de réalisation illustrée sur la figure 4, le capot 36 est réalisé venu de matière avec une pièce de montage 50 qui est destinée à être reçue entre les faces internes en vis-à-vis 32 des joues latérales 12 et le capot 36 se prolonge ainsi, vers la droite en considérant la figure 4 et comporte donc des moyens de fixation 38 agencés au voisinage de ses deux extrémités latérales et opposées.

Dans la variante de réalisation illustrée sur la figure 5, le capot 36 présente une conception symétrique avec deux portions d'extrémité opposées 36 formant capot et une ouverture centrale permettant d'accéder à l'intérieur du balai d'essuie-glace 10.

## Revendications

1. Balai d'essuie-glace (10) de véhicule automobile, du type comportant deux ailes latérales (12) reliées entre elles par un dos transversal supérieur (14) qui comporte une ouverture longitudinale (16), destinée par exemple à permettre l'introduction de moyens d'accrochage d'un bras d'essuie-glace (22) sur le balai d'essuie-glace (10), et du type comportant un capot (36) d'obturation partielle de l'ouverture (16), caractérisé en ce que le capot (36) est une pièce amovible fixée sur le balai d'essuie-glace (10, 12).

2. Balai d'essuie-glace selon la revendication 1, caractérisé en ce que le capot (36) comporte au moins un pion de fixation (42) reçu dans un trou correspondant (44) formé dans le dos transversal (14) du balai d'essuie-glace (10) au voisinage de l'un des bords transversaux d'extrémité (26) de l'ouverture (16).

3. Balai d'essuie-glace selon la revendication 2, caractérisé en ce que le pion (42) s'étend depuis la face inférieure (40) du capot (36).

4. Balai d'essuie-glace selon l'une des revendications 2 ou 3, caractérisé en ce que le capot (36) est susceptible de pivoter par rapport au balai d'essuie-glace (10) autour de l'axe du pion (42), en vue de dégager l'ouverture (16).

5. Balai d'essuie-glace selon l'une quelconque des revendications précédentes, caractérisé en ce que le capot (36) est souple de manière à pouvoir être soulevé par déformation élastique, en vue de dégager l'ouverture (16).

6. Balai d'essuie-glace selon l'une quelconque des revendications précédentes, caractérisé en ce que le capot (36) est fixé au dos du balai d'essuie-glace (10) par ses deux extrémités longitudinales opposées.

7. Balai d'essuie-glace selon l'une quelconque des revendications précédentes, caractérisé en ce que le profil de la face supérieure (46) du capot (36) épouse sensiblement le profil des bords longitudinaux supérieurs (24) de l'ouverture (16).
